# EUROPÄISCHE PATENTSCHRIFT

(11) **EP 2 057 048 B1**
(45) Veröffentlichungstag und Bekanntmachung des Hinweises auf die Patenterteilung: **14.03.2012**
(21) Anmeldenummer: 07801645.8
(22) Anmeldetag: 14.08.2007
(51) Int. Cl.: B60T 8/171, B60T 8/88, G01L 27/00, G01D 18/00, G08B 25/04, G08C 19/04, B60T 17/22

(54) **ANORDNUNG ZUM BETRIEB EINES SENSOR**
ARRANGEMENT FOR OPERATING A SENSOR
ARRANGEMENT POUR L'UTILISATION D'UN CAPTEUR

(30) Priorität: 22.08.2006 DE 102006039295
(43) Veröffentlichungstag der Anmeldung: 13.05.2009
(73) Patentinhaber: KNORR-BREMSE Systeme für Nutzfahrzeuge GmbH, 80809 München (DE)
(72) Erfinder: ARLT, Andreas, 71672 Marbach (DE); FEUCHT, Thomas, 71299 Wimsheim (DE); BRAUN, Robert, 71701 schwieberdingen (DE); HORN, Anton, 81247 München (DE)
(74) Vertreter: Schönmann, Kurt
(86) Internationale Anmeldenummer: PCT/EP2007/007169
(87) Internationale Veröffentlichungsnummer: WO 2008/022729

(56) Entgegenhaltungen:
- EP-A- 0 790 489
- EP-A- 0 845 660
- DE-A1- 10 022 013
- DE-A1- 10 130 215
- DE-A1- 19 911 526
- US-A- 5 288 139

## Beschreibung

Die vorliegende Erfindung betrifft eine Anordnung zum Betrieb eines Sensors, der im Wesentlichen aus einem mit dem Messmedium zusammenwirkenden Sensorelement und einer örtlich zugeordneten Steuerelektronik besteht und über mindestens eine unidirektionale Signalleitung sowie mindestens eine Versorgungsspannungsleitung mit einem ortsfernen elektronischen Steuergerät in Verbindung steht, das eine Spannungseinheit zur Bereitstellung der Versorgungsspannung für den Sensor sowie eine Signalverarbeitungseinheit zur Auswertung des Messsignals umfasst.

Das Anwendungsgebiet der vorliegenden Erfindung erstreckt sich vornehmlich auf die Kraftfahrzeugtechnik. Hier werden - beispielsweise im Rahmen eines pneumatischen Bremssystems bei Nutzfahrzeugen - verschiedenartige Sensoren zur Ermittlung von Betriebszuständen des Bremssystems verwendet. So kommen insbesondere Sensoren zur Erfassung von physikalischen Größen, wie Druck, Temperatur, Beschleunigung und dergleichen zum Einsatz. Mit all diesen Sensoren werden analoge Messwerte ermittelt, die in Form eines elektrischen Signals an übergeordnete Steuergeräte zur Datenverarbeitung weitergeleitet werden.

Aus dem allgemeinen Stand der Technik gehen derartige Sensoren hervor, welche gewöhnlich aus einem mit dem Messmedium - beispielsweise Druckluft - zusammenwirkenden Sensorelement und einer nachgeschalteten Steuerelektronik bestehen. Sensorelement und zugeordnete Steuerelektronik sind gewöhnlich innerhalb eines gemeinsamen Gehäuses untergebracht. Das Gehäuse weist elektrische Anschlüsse zur Weiterleitung des Messwerts auf, die mindestens für eine Signalleitung und eine Versorgungsspannungsleitung vorgesehen sind. Daneben kann auch ein Masseanschluss zum Anschließen einer Masseleitung am Sensor vorgesehen sein. Alternativ hierzu kann der Masseanschluss jedoch auch über einen Massekontakt des aus einem leitfähigen Metall bestehenden Gehäuses hergestellt werden. Die Versorgungsspannungsleitung dient der Zuführung der für die Steuerelektronik erforderlichen Betriebsspannung. Die Steuerelektronik herkömmlicher Sensoren sorgt insbesondere für eine Messwertaufbereitung, -verstärkung und -anpassung. Das über die Steuerelektronik örtlich im Sensor aufbereitete Messsignal geht über die unidirektionale Signalleitung einem ortsfernen, meist zentralen Steuergerät zur weiteren Messwertverarbeitung zu.

Aus der DE 199 11 526 A1 ist ein Verfahren zum Überwachen eines Sensors bekannt. In einer Überwachungsphase wird ein vorbestimmtes Testsignal auf den Sensorausgang gelegt, das in der Auswerteeinheit empfangen und ausgewertet wird. Um ohne separate Zusatzleitung zu jedem beliebigen Zeitpunkt eine Überwachungsphase auslösen zu können, wird vorgeschlagen, zur Initialisierung der Überwachung von der Auswerteeinheit ein Signal mit vorgegebenen Triggerpegel auf die Ausgangsleitung zu legen, welches im Sensor detektiert wird, woraufhin die Testphase eingeleitet wird.

Auf dem Gebiet der hier interessierenden Sensoren besteht zunehmend das Bedürfnis, deren Steuerelektronik mit zusätzlichen Funktionen auszustatten. So ist es wünschenswert, wenn der Sensor beispielsweise einen Testmodus zum Selbsttest ausführen kann, um diesen zu jedem gewünschten Zeitpunkt während des Betriebs durchzuführen. Herkömmliche Sensoren sind lediglich in der Lage, einmalig beim Einschalten oder zyklisch in definierten Zeitabständen einen Selbsttest zu durchlaufen. Während des laufenden Betriebs ist die Wiederholung eines solchen Selbsttests jedoch nicht möglich, da herkömmliche Sensoren der hier interessierenden Art hierauf nicht ausgelegt sind. Bei häufigen zyklischen Wiederholungen kann der Sensorbetrieb beeinträchtigt werden.

Es ist bereits versucht worden, den Sensor mit einer zusätzlichen Anschlussleitung zu versehen, über welche ein Startsignal zur Auslösung zusätzlicher Modi, wie Selbsttest oder Kalibrierung und dergleichen, übertragen werden kann. Allerdings erfordert eine derartige zusätzliche Steuerleitung entsprechenden Verdrahtungsaufwand in Form des hiermit verbundenen Material- und Montageaufwands.

Es ist daher die Aufgabe der vorliegenden Erfindung, eine gattungsgemäße Anordnung zum Betrieb eines Sensors dahingehend weiter zu verbessern, dass ein in der Steuerelektronik des Sensors implementierter Testmodus in einfacher Weise von einem ortsfemen Steuergerät aus wiederholt auslösbar ist.

Die Aufgabe wird ausgehend von einer Anordnung zum Betrieb eines Sensors gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zum Auslösen eines Testmodus im Sensor seitens des Steuergeräts Mittel zur Erzeugung eines definierten Lastwechsels im Stromkreis zwischen Signalleitung und Masse vorgesehen sind, wobei der Lastwechsel von Stromüberwachungsmitteln seitens der Steuerelektronik detektierbar und als Startsignal des Testmodus interpretierbar ist.

Der Vorteil der erfindungsgemäßen Lösung liegt insbesondere darin, dass diese Art von Auslösung des Testmodus keine weitere elektrische Leitung zwischen Sensor und Steuergerät bedarf. Eine vorhandene simple unidirektionale Signalleitung ist in Verbindung mit den seitens des Sensors vorgesehenen Stromüberwachungsmitteln ausreichend, um das erforderliche Startsignal für einen Testmodus zu erzeugen. Als Testmodus im Sinne der vorliegenden Erfindung wird ein Selbsttest zur Diagnose der Funktionsfähigkeit des Sensors oder einer Kalibrierung zum Nullpunktabgleich verstanden. Es ist jedoch auch denkbar, mit Hilfe der erfindungsgemäßen Lösung auch andere von außen her bedarfsweise zu startende Funktionen innerhalb des Sensors auszulösen. Beispielsweise kann die erfindungsgemäße Lösung auch zur Umschaltung von Messbereichen des Sensors und dergleichen verwendet werden.

Die Mittel zur Erzeugung des definierten Lastwechsel umfassen mindestens zwei ausgehend von der Signalleitung zueinander parallel gegen Masse geschaltete Ohm'sche Lastwiderstände. Steuergeräteseitig läst sich die erfindungsgemäße Lösung somit mit denkbar einfachsten elektronischen Bauelementen realisieren. Zum Auslösen des Lastwechseln ist mindestens einer der Lastwiderstände mit einem Schalter in Reihe gegen Masse geschaltet. Es ist auch möglich, stattdessen die Widerstände gegen die Spannungsversorgungsleitung (Potential) zu schalten. Wird also innerhalb der Parallelschaltung der Widerstände ein weiterer Widerstand über den Schalter zugeschaltet, fließt in dem Stromkreis zwischen Signalleitung und Masse bzw. Potential ein höheren elektrischer Strom, der einen Abfall des Ausgangssignals bewirkt. Dieser durch den Wert der gewählten Widerstände definierte Spannungsabfall lässt sich seitens der Steuerelektronik des Sensors eindeutig als Steuerinformation auswerten, hier also als Startsignal für den Testmodus. Neben einer derartigen Spannungsverlaufsüberwachung ist diese Steuerinformation auch über eine Stromüberwachung seitens der Steuerelektronik im Sensor in ähnlicher Weise gewinnbar.

Vorzugsweise lässt sich die erfindungsgemäße Lösung mit nur zwei Lastwiderständen realisieren, was den Bauteileaufwand minimiert. Hierbei ist ein hinsichtlich des Widerstandswerts fixer Lastwiderstand und ein hinsichtlich des Widerstandswerts schaltbarer Lastwiderstand vorgesehen. Die Widerstandswerte können sich unterscheiden oder gleich groß sein.

Gemäß einer bevorzugten Ausführungsform der Erfindung ist am Sensor genau eine unidirektionale Signalleitung, eine Versorgungsspannungsleitung sowie eine Masseleitung anschließbar. Alternativ hierzu ist es jedoch auch denkbar, das Gehäuse des Sensors aus einem leitfähigen Metall herzustellen und den Masseanschluss über einen Gehäusekontakt, beispielsweise mit der Chassis eines Fahrzeuges, zu realisieren.

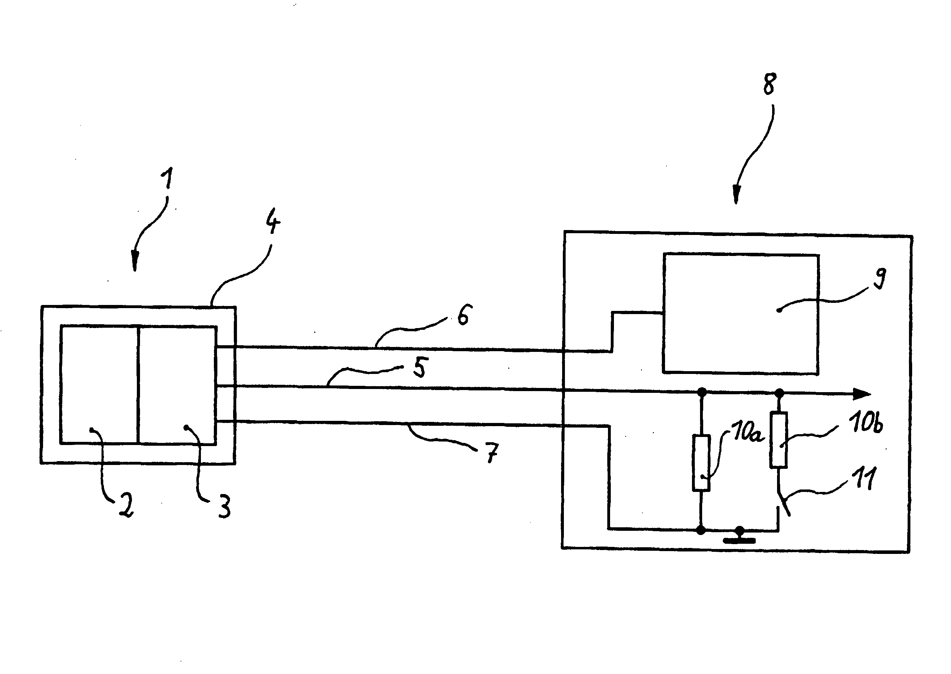

Weitere, die Erfindung verbessernde Maßnahmen werden nachstehend gemeinsam mit der Beschreibung eines Ausführungsbeispiels der Erfindung anhand der einzigen Figur näher dargestellt. Die Figur zeigt ein Blockschaltbild einer Anordnung zum Betrieb eines Sensors.

Gemäß Figur besteht ein hier zum Messen eines Drucks vorgesehener Sensor 1 aus einem mit dem Druck eines - nicht weiter dargestellten - pneumatischen Bremssystems zusammenwirkenden Sensorselement 2 sowie einer hiermit gekoppelten zugeordneten Steuerelektronik 3. Sensorelement 2 und Steuerelektronik 3 sind innerhalb eines gemeinsamen Gehäuses 4 untergebracht.

Der Sensor 1 ist über eine unidirektionale Signalleitung 5, eine Versorgungsspannungsleitung 6 sowie eine Masseleitung 7 an einem ortsfemen Steuergerät 8 elektrisch angeschlossen. Die Spannungsversorgung des Sensors 1 erfolgt über die Spannungsversorgungsleitung 6, wozu innerhalb des Steuergeräts 8 eine Spannungsversorgungseinheit 9 vorgesehen ist. Die Spannungsversorgungseinheit 9 stellt eine Gleichspannung im Niedervoltbereich für den Sensor 1 zur Verfügung. Die Betriebsspannung liegt zwischen der Versorgungsspannungsleitung 6 und der Masseleitung 7 an.

Die unidirektionale Signalleitung 5 liefert den ausgangsseitig am Sensor 1 zur Verfügung gestellten Druckmesswert an das Steuergerät 8 zur weiteren - nicht weiter illustrierten - Signalverarbeitung.

Die Steuerelektronik 3 des Sensors 1 verkörpert in ihrem Funktionsumfang auch einen Testmodus, der einen Selbsttest auf eine korrekte Funktion des Sensors 1 durchführt. Zum Auslösen dieses Testmodus im Sensor 1 sind Mittel zur Erzeugung eines definierten Lastwechsels im Stromkreis zwischen der Signalleitung 5 und der Masseleitung 7 vorgesehen. Ein solcher definierter Lastwechsel wird von Stromüberwachungsmitteln seitens der Steuerelektronik 3 des Sensors 1 detektiert und über den definierten Wert als Startsignal für den Testmodus interpretiert. Findet also der definierte Lastwechsel statt, so geht der Sensor 1 in den Testmodus zwecks Selbsttest über, führt diesen durch, liefert anschließend über die unidirektionale Signalleitung 5 ein Ergebnissignal zum Steuergerät 8 und kehrt anschließend in den normalen Betriebsmodus zurück, in welchem der Sensor 1 Drucksignale als Messwert an das Steuergerät 8 liefert.

Zur Erzeugung des besagten definierten Lastwechsels werden seitens des Steuergeräts 8 zwei zueinander parallel geschaltete Ohm'sche Lastwiderstände 10a und 10b verwendet. Der eine, fixe Lastwiderstand 10a weist in diesem Ausführungsbeispiel einen Widerstandswert von 100 Kiloohm auf. Neben dem fixen Lastwiderstand 10a ist ein zweiter, schaltbarer Lastwiderstand 10b mit einem geringeren Widerstandswert von hier 10 Kiloohm vorgehen. Der schaltbare Lastwiderstand ist über einen Schalter 11 ausgehend von der Signalleitung 5 an Masse geschaltet.

Zur Auslösung des Testmodus wird - beispielsweise über eine entsprechende elektronische Ansteuerung - der Schalter 11 seitens des Steuergeräts 8 geschlossen. Über den hierdurch herbeigeführten Lastanstieg im Stromkreis zwischen Signalleitung 5 und Masseleitung 7 aufgrund der Parallelschaltung der beiden Lastwiderstände 10a und 10b findet ein Stromanstieg in dem besagten Stromkreis statt, der seitens der Steuerelektronik 3 des Sensors 1 durch entsprechende Stromüberwachungsmittel detektiert wird und als Startsignal zur Auslösung des Testmodus interpretiert wird.

Die Erfindung ist nicht beschränkt auf das vorstehend beschriebene bevorzugte Ausführungsbeispiel. Es sind vielmehr auch andere Anwendungsfälle denkbar, welche vom Schutzbereich der nachfolgenden Ansprüche umfasst sind.

So ist die Erfindung nicht allein beschränkt auf den Einsatz bei analogen Drucksensoren. Prinzipiell ist die erfindungsgemäße Lösung auch auf andere Sensoren und vergleichbare elektronische Bauelemente anwendbar, deren integrierte Steuerelektronik verschiedenartige Testmodi oder dergleichen beinhaltet, welche bedarfsweise über ein ortsfernes, übergeordnetes Steuergerät in einfacher Weise auszulösen sind.

### Bezugszeichenliste

- **1**: Sensor
- **2**: Sensorelement
- **3**: Steuerelektronik
- **4**: Gehäuse
- **5**: Signalleitung
- **6**: Versorgungsspannungsleitung
- **7**: Masseleitung
- **8**: Steuergerät
- **9**: Spannungsversorgungseinheit
- **10**: Ohm'scher Lastwiderstand
- **11**: Schalter

## Patentansprüche

1. Anordnung zum Betrieb eines Sensors (1), der im wesentlichen aus einem mit dem Messmedium zusammenwirkenden Sensorelement (2) und einer örtlich zugeordneten Steuerelektronik (3) besteht und über mindestens eine unidirektionale Signalleitung (5) sowie eine Versorgungsspannungsleitung (6) mit einem ortsfemen Steuergerät (8) in Verbindung steht, das eine Spannungsversorgungseinheit (9) zur Bereitstellung der Versorgungsspannung für den Sensor (1) umfasst, wobei zum Auslösen eines Testmodus im Sensor (1) seitens des Steuergeräts (8) Mittel zur Erzeugung eines definierten Lastwechsels im Stromkreis zwischen Signalleitung (5) und Masse vorgesehen sind, welcher von Stromüberwachungsmitteln seitens der Steuerelektronik (3) detektierbar und als Startsignal des Testmodus interpretierbar ist,
**dadurch gekennzeichnet, dass** die Mittel zur Erzeugung des definierten Lastwechsels mindestens zwei ausgehend von der Signalleitung (5) zueinander parallel gegen Masse geschaltete in Form separater Bauelemente ausgeführte ohmsche Lastwiderstände (10a,10b) umfassen, wobei zum Auslösen des Lastwechsels mindestens einer der Lastwiderstände (10b) mit einem Schalter (11) in Reihe gegen Masse oder gegen die Versorgungsspannungsleitung (6) schaltbar ist, um einen Selbsttestmodus der korrekten Funktion des Sensors (1) oder Kalibrierungsmodus zum Nullpunktabgleich des Sensors (1) oder einen Testmodus zur Umschaltung von Messbereichen des Sensors (1) zu aktivieren.

2. Anordnung nach Anspruch 1,
**dadurch gekennzeichnet, dass** genau zwei Lastwiderstände (10a,10b) vorgesehen sind, wobei der schaltbare Lastwiderstand (10b) einen gleich großen oder unterschiedlichen Widerstandswert als der fixe Lastwiderstand (10a) aufweist.

3. Anordnung nach Anspruch 2,
**dadurch gekennzeichnet, dass** der fixe Lastwiderstand (10a) einen Widerstandswert von 100 Kiloohm und der schaltbare Lastwiderstand (10b) einen Widerstandswert von 10 Kiloohm aufweist.

4. Anordnung nach Anspruch 1,
**dadurch gekennzeichnet, dass** am Sensor (1) genau eine Signalleitung (5), Versorgungsspannungsleitung (6) sowie Masseleitung (7) anschließbar ist.

5. Anordnung nach einer der vorstehenden Ansprüche,
**dadurch gekennzeichnet, dass** der Sensor (1) nach Art eines analogen Sensors zur Messung eines Istdruckwerks innerhalb des pneumatischen Bremssystems eines Kraftfahrzeuges ausgebildet ist.

## Claims

1. Arrangement for operating a sensor (1) that consists substantially of a sensor element (2) interacting with the measuring medium and a locally associated electronic control unit (3) and that is connected via at least one unidirectional signal line (5) as well as a supply voltage line (6) to a remote controller (8) including a voltage supply unit (9) providing the supply voltage for said sensor (1), wherein means are provided for generating a defined change of load in the circuit between said signal line (5) and mass in order to trigger a testing mode in said sensor (1) on the side of said controller (8), which change of load can be detected on the side of said electronic control unit (3) and can be interpreted as starting signal of said testing mode,
**characterized in that** said means for generating the defined change of load comprise at least two ohmic load resistors (10a, 10b) designed in the form of separate components and connected from said signal line (5) in parallel to each other towards mass, wherein at least one of said load resistors (10b) is adapted to be connected in series to mass or to said supply voltage line (6) for activation of a self-test mode of the correct function of said sensor (1) or a calibration mode for zero-point adjustment of said sensor (1) or a testing mode for change-over of measuring ranges of said sensor (1).

2. Arrangement according to Claim 1,
**characterized in that** precisely two load resistors (10a, 10b) are provided, with said switchable load resistor (10b) displaying a resistance value equal to or different from the resistance value of said invariable load resistor (10a).

3. Arrangement according to Claim 2,
**characterized in that** said invariable load resistor (10a) has a resistance value of 100 kilo-Ohm whilst said switchable load resistor (10b) has a resistance value of 10 kilo-Ohm.

4. Arrangement according to Claim 1,
**characterized in that** precisely one signal line (5), one supply voltage line (6) as well as one mass line (7) can be connected to said sensor (1).

5. Arrangement according to any of the preceding Claims,
**characterized in that** said sensor (1) is configured in the manner of an analog sensor for measuring an actual pressure value within the pneumatic brake system of a motor vehicle.

## Revendications

1. Arrangement à commander un capteur (1), qui consiste essentiellement en un élément capteur (2) en interaction avec le milieu de mesure et une unité électronique de commande localement affectée (3), et qui est raccordé via au moins une ligne de signalisation unidirectionnelle (5) ainsi qu'une ligne d'alimentation de tension (6) à une unité de télécommande (8), qui renferme une unité d'alimentation en tension (9), qui fournit la tension d'alimentation pour ledit capteur (1), dans lequel des moyens sont disposés pour la création d'une commutation de puissance définie dans le circuit entre ladite ligne de signalisation (5) et la masse afin de déclencher un mode d'essai dans ledit capteur (1) du coté de ladite unité de commande (8), à cette commutation de puissance étant détectable du côté de ladite unité électronique de commande (3) et interprétable en tant que signal de démarrage du mode d'essai,
**caractérisé en ce que** lesdits moyens à engendrer une commutation de puissance définie comprend au moins deux résistance de charges (10a, 10b) ohmiques, qui sont conçu sous forme des composants séparés et raccordés à partir de ladite ligne de signalisation (5) en parallèle l'un à l'autre vers la masse, dans lequel au moins une desdites résistances de charge (10b) est apte à être raccordée en série à la masse ou à ladite ligne d'alimentation de tension (6) afin d'activer un mode d'essai automatique de la fonction correcte dudit capteur (1) ou un mode de calibrage pour le réglage du point zéro dudit capteur (1) ou d'un mode d'essai pour la commutation des régimes de mesure dudit capteur (1).

2. Arrangement selon la revendication 1,
**caractérisé en ce que** précisément deux résistances de charge (10a, 10b) sont disposées, dont ladite résistance de charge commutable (10b) a une valeur de résistance égale à ou non-égale à la valeur de résistance de ladite résistance de charge fixe (10a).

3. Arrangement selon la revendication 2,
**caractérisé en ce que** ladite résistance de charge fixe (10a) a une valeur de résistance de 100 kilo-Ohm, pendant que ladite résistance de charge commutable (10b) a une valeur de résistance de 10 kilo-Ohm.

4. Arrangement selon la revendication 1,
**caractérisé en ce que** précisément une ligne de signalisation (5), une ligne de tension d'alimentation (6) ainsi qu'une ligne de mise à la masse (7) se peuvent relier audit capteur (1).

5. Arrangement selon une quelconque des revendications précédentes, **caractérisé en ce que** ledit capteur (1) est configuré de la manière d'un capteur analogique à mesurer une valeur instantanée de pression à l'intérieur d'un système pneumatique de freinage d'un véhicule automobile.
